# EUROPEAN PATENT SPECIFICATION

(11) **EP 3 230 516 B1**
(45) Date of publication and mention of the grant of the patent: **20.02.2019**
(21) Application number: 14811908.4
(22) Date of filing: 12.12.2014
(51) Int. Cl.: A47L 15/42, D06F 39/04, D06F 39/08, D06F 39/00

(54) **HEAT PUMP ARRANGED IN A DOMESTIC APPLIANCE FOR HEATING WATER**
WÄRMEPUMPE IN EINEM HAUSHALTSGERÄT ZUM ERWÄRMEN VON WASSER
POMPE À CHALEUR AGENCÉE DANS UN APPAREIL MÉNAGER POUR CHAUFFER DE L'EAU

(43) Date of publication of application: 18.10.2017
(73) Proprietor: Electrolux Appliances Aktiebolag, 105 45 Stockholm (SE)
(72) Inventor: DREOSSI, Giuseppe, S-10545 Stockholm (SE); WAHLBERG, Magnus, S-10545 Stockholm (SE)
(74) Representative: Electrolux Group Patents
(86) International application number: PCT/EP2014/077596
(87) International publication number: WO 2016/091329

(56) References cited:
- EP-A1- 2 096 203

## Description

### TECHNICAL FIELD

The invention relates to a heat pump arranged in a domestic appliance, and a domestic appliance comprising the heat pump.

### BACKGROUND

In the art, heaters are used in domestic appliances such as washing machines, dishwashers, water heaters, etc. for heating water in the domestic appliance. Conventional heating elements, like an electrified metallic element being in contact with the water, are less energy efficient than for instance heat pumps.

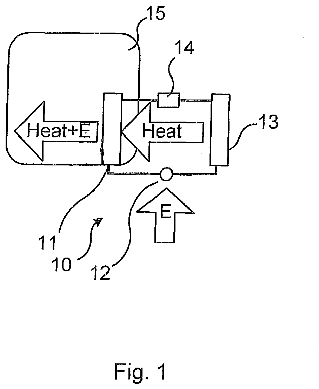

Heat pump systems conventionally use a condenser, a compressor and an evaporator, see Figure 1. A heat pump system is a closed system where the compressor runs a refrigeration cycle by pressurizing and circulating fluid such as air or water in the system. At the condenser, where the water to be heated is contained, the hot and pressurized fluid is discharged thereby heating the water. Thus, the condenser transfers heat to the water in the container. The fluid is cooled in the condenser and passes through an expansion valve to the evaporator where the fluid absorbs heat and is fed to the compressor where a new refrigeration cycle commences. In such a heat pump system for a domestic appliance, energy efficiency of the heat exchange process is important and must continuously be improved, in particular in view of ever increasing focus on sustainability and environmental issues.

EP 2 096 203 A1 discloses a washing machine with a heat pump, where the heat of the drain water is used as a heat source for the evaporator. The condenser is placed at the tub, or along the process water circulation system, such as at the pump.

### SUMMARY

An object of the present invention is to solve, or at least mitigate, problems in the art relating to energy efficiency and to provide an improved domestic appliance heat pump.

This object is attained according to the present invention as defined in claim 1. A heat pump is arranged in a domestic appliance for heating water in the domestic appliance,
wherein a condenser of the heat pump is integrated with a circulation pump of the domestic appliance, which circulation pump is configured to circulate the water heated by the condenser.

This object is attained in a second aspect of the present invention by a domestic appliance comprising a heat pump for heating water and a circulation pump for circulating the water, wherein a condenser of the heat pump is integrated with the circulation pump, the circulation pump being configured to circulate the water heated by the condenser.

Advantageously, with the condenser of the heat pump according to embodiments of the present invention being integrated with the circulation pump, high energy efficiency is obtained; the circulation pump will cause process water to be heated to turbulently flow in the circulation pump thereby advantageously providing for a high degree of thermal contact of the circulated water with the condenser.

The efficiency of the condenser is related to a number of parameters, such as contact area with a refrigerant and its so called Reynolds number Re being defined as the ratio of inertial forces to viscous forces and for a given flow condition. Moreover, heat transfer rate Q from the condenser to the water being circulated in the domestic appliance (referred to as process water) is defined as *Q* = *A x U x ΔT,* where *A* is the heat transfer surface area of the condenser, *U* is the overall heat transfer coefficient and *ΔT* is the difference in temperature between condenser temperature and surrounding fluid.

The condenser of the heat pump is arranged in a volute of the circulation pump. The volute will receive the process water that is pumped by an impeller of the circulation pump. Thus, the degree of contact of the circulated process water with the volute will be high, thus advantageously resulting in high energy exchange between the process water and the condenser.

To improve the heat transfer rate *Q*-value, it is important to provide a large condenser surface for heat transfer. On the other hand, a large condenser surface requires the volume of the pipe which circulates the refrigerant of the heat pump to be increased, if a great pressure drop in the heat pump is to be avoided.

Further, in a domestic appliance, the water consumption is directly related to the volume of the pipe transporting the process water to the circulation pump and back into the washing compartment, and a large pipe volume will negatively affect the water consumption. Integrating the condenser with the circulation pump will make better use of available space in the circulation pump, thereby advantageously moving the condenser from being located in the pipe transporting the process water, which advantageously can be made to have a smaller volume, and thereby lower the water consumption.

The condenser is configured to be ring-shaped to fit an inner circular wall of the volute of the circulation pump, which advantageously provides for efficient use of the volute in terms of space.

In yet an embodiment, an evaporator of the heat pump is arranged at a peripheral wall of the domestic appliance thereby being exposed to ambient air which advantageously provides a cooling effect.

In yet another embodiment, the cooling effect may advantageously be increased by arranging the domestic appliance with a variable speed fan configured to create a flow of air onto the evaporator.

With the heat pump and the circulation pump of the present invention, an energy and water efficient domestic appliance is attained, since the condenser of the heat pump is integrated with the circulation pump where the Reynolds number is as high as possible.

Preferred embodiments of the present invention will be described in the following.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 illustrates a prior art heat pump;
Figure 2 illustrates a dishwasher in which a heat pump and a circulation pump according to embodiments of the present invention are implemented; and
Figures 3a-c illustrates different views of a circulation pump in which the condenser of the heat pump is integrated according to embodiments of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Figure 1 illustrates a conventional heat pump 10 utilized to heat water in a tub 15. The heat pump 10 comprises a condenser 11, a compressor 12, an evaporator 13 and a expansion valve 14. As can be seen, the heat pump 10 is a closed system where the compressor 12 runs a refrigeration cycle by pressurizing and circulating refrigerant such as air or water in the system. Energy E is hence supplied to the compressor 12 for pressurizing and circulating the refrigerant. At the condenser 11 being in thermal contact with the tub 15 where the water to be heated is contained, the hot and pressurized refrigerant is discharged causing the energy E, as well as heat drawn from e.g. air entering to the evaporator 13, to heat the water. The refrigerant is cooled in the condenser 11 by means of the energy discharge and passes through the expansion valve 14 to the evaporator 13 where the refrigerant absorbs heat and is fed to the compressor 12 where a new refrigeration cycle commences. A great advantage of such a heat pump 10 is that the total amount of energy discharged into the tub 15 is lower than the supplied to the compressor 12 by taking advantage of the heat drawn from the air entering the evaporator 14.

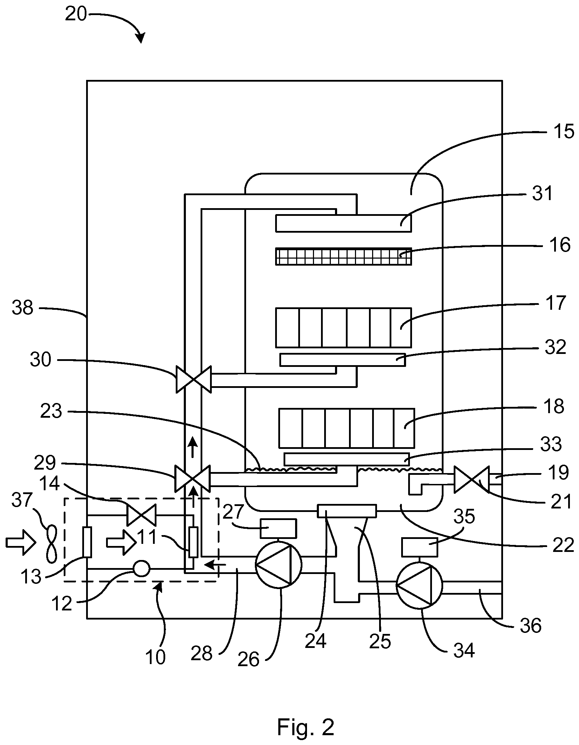

Figure 2 shows a domestic appliance in the form of dishwasher 20 in which the present invention can be implemented. It should be noted that dishwashers can take on many forms and include many different functionalities. The dishwasher 20 illustrated in Figure 2 is thus used to explain different embodiments of the present invention and should only be seen as an example of a dishwasher in which the present application can be applied. Further, various domestic appliances in which the present invention maybe implemented can be envisaged, such as washing machines, water heaters, coffee machines, etc.

The dishwasher 20 comprises a washing compartment or tub 15 housing an upper basket 16, a middle basket 17 and a lower basket 18 for accommodating goods to be washed. Typically, cutlery is accommodated in the upper basket 16, while plates, drinking-glasses, trays, etc. are placed in the middle basket 17 and the lower basket 18.

Detergent in the form of liquid, powder or tablets is dosed in a detergent compartment located on the inside of a door (not shown) of the dishwasher 20 by a user, which detergent is controllably discharged into the washing compartment 15 in accordance with a selected washing programme. The operation of the dishwasher 20 is typically controlled by a processing unit (not shown) executing appropriate software.

Fresh water is supplied to the washing compartment 15 via water inlet 19 and water supply valve 21. This fresh water is eventually collected in a so called sump 22, where the fresh water is mixed with the discharged detergent resulting in process water 23. At the bottom of the washing compartment is a filter 24 for filtering soil from the process water before the process water leaves the compartment via process water outlet 25 for subsequent re-entry into the washing compartment 15 through a circulation pump 26. Thus, the process water 23 passes the filter 24 and is pumped through the circulation pump 26, which typically is driven by a brushless direct current (BLDC) motor 27, via a conduit 28 and respective process water valves 29, 30 and sprayed into the washing compartment 15 via nozzles (not shown) of a respective wash arm 31, 32, 33 associated with each basket 16, 17, 18.

A drain pump 34 is driven by a BLDC motor 35 for draining the dishwasher 20 on process water 23 via a drain outlet 36, when required. It should be noted that it can be envisaged that the drain pump 34 and the circulation pump 26 may be driven by one and the same motor.

Alternatively, the pumps may be driven by brushless alternating current (BLAC) motors.

Further included in the dishwasher 20 is a heat pump 10 according to an embodiment of the present invention. Hence, the compressor 12 runs a refrigeration cycle by pressurizing and circulating the refrigerant to the condenser 11 which is in thermal contact with the process water 23 circulating in the conduit 28, and thereby heats the process water 23 by energy discharge of the condenser 11. The heat pump refrigerant then enters the expansion valve 14 and is passed to the evaporator 13. The evaporator 13 is subject to air of room temperature by being arranged at a peripheral wall 38 of the dishwasher 20, which ambient air is utilized to supply energy to the condenser 11. The evaporator 13 discharges cold air which may be used for cooling purposes. A new refrigeration cycle subsequently commences. In brief, the heat pump 10 absorbs heat from a colder element, in the form of the evaporator 13, and releases the heat at a warmer element, namely the condenser 11.

In an embodiment, the ambient air is applied onto the evaporator 13 by means of a variable speed fan 37.

Thus, the process water 23 exits the washing compartment 15 via the filter 24 and is recirculated via the circulation pump 26 and heated by the heat pump 10 and sprayed onto the goods to be washed accommodated in the respective basket via nozzles of the upper washing arm 31, middle washing arm 32 and lower washing arm 33.

As previously mentioned, in heat pumps for domestic appliances, energy efficiency of the heat exchange process is important and must continuously be improved, in particular in view of ever increasing focus on sustainability and environmental issues.

Advantageously, with the condenser 11 of the heat pump 10 according to embodiments of the present invention being integrated with the circulation pump 26, high energy efficiency is obtained.

The efficiency of the condenser 11 is related to a number of parameters, such as contact area with the refrigerant and its so called Reynolds number Re being defined as the ratio of inertial forces to viscous forces and for a given flow condition. Moreover, heat transfer rate Q from the condenser 11 to the process water 23 flowing in the conduit 28 is defined as *Q* = *A x U x ΔT*, where A is the heat transfer surface area of the condenser 11, Uis the overall heat transfer coefficient and *ΔT* is the difference in temperature between condenser temperature and surrounding fluid.

To improve the heat transfer rate Q-value, it is important to provide a large condenser surface for heat transfer. On the other hand, a large condenser surface requires the volume of the hydraulic pipe which circulates the refrigerant of the heat pump to be increased, if a great pressure drop in the heat pump is to be avoided. In a domestic appliance, the water consumption is directly related to the volume of the hydraulic pipe which circulates the refrigerant of the heat pump, thereby negatively affecting the water consumption.

With the heat pump 10 of the present invention, an energy and water efficient appliance is attained, since the condenser 11 of the heat pump is integrated with the circulation pump 26 where the Reynolds number is as high as possible. In a preferred embodiment, the condenser 11 of the heat pump 10 is arranged in a volute of the circulation pump 26 as will be discussed.

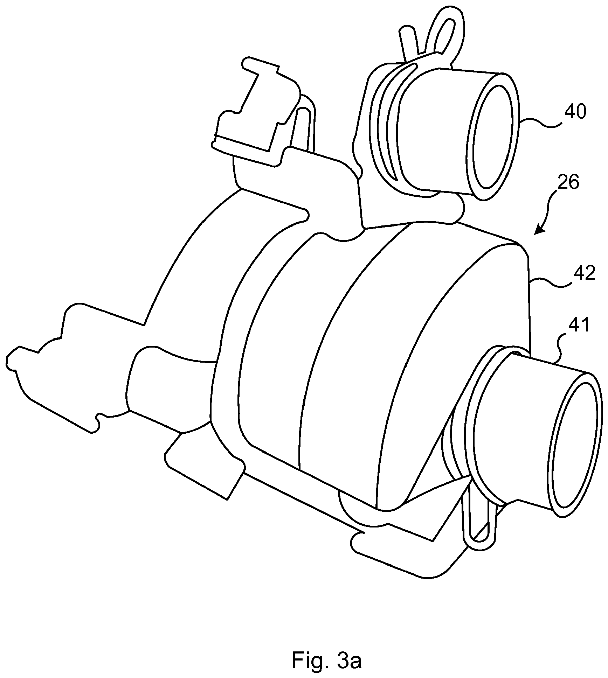

Figures 3a-c illustrate an embodiment of the heat pump 10 of the present invention, where the condenser 11 of the heat pump is arranged in a volute of the circulation pump 26.

Figure 3a shows a view of a circulation pump 26 in which the present invention can be implemented. Figure 3a shows in outlet 40 (referred to as a discharge port) of the circulation pump 26 and an inlet 41. The casing 42 of the circulation pump 26 is referred to as the volute and can be removed from a main body 43 of the circulation pump 26.

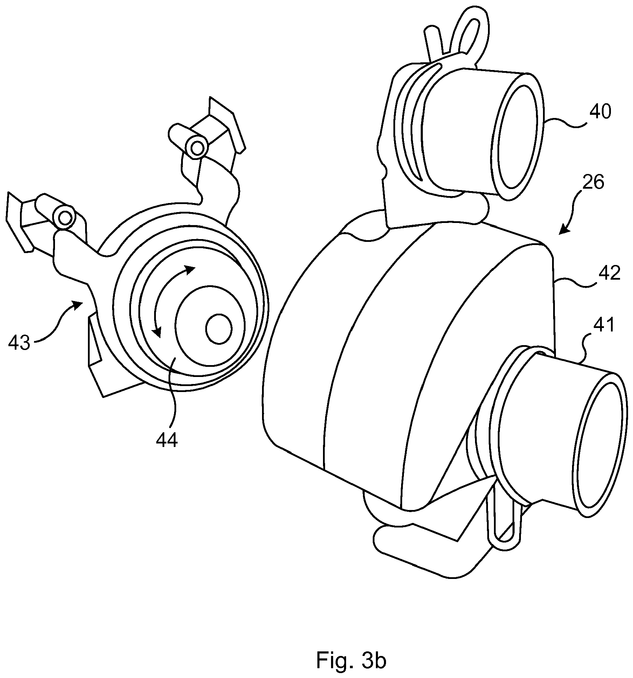

Figure 3b shows a further view of the circulation pump 26 of Figure 3a, where the volute 42 has been removed from the main body 43 of the circulation pump, thereby revealing the impeller 44 of the circulation pump which under operation pumps the process water that is entering the circulation pump 26 via the inlet 41. The process water that is pumped by the impeller 44 is subsequently received by the volute 42, which slows down the flow rate of the process water, and exits the circulation pump 26 via the outlet 40.

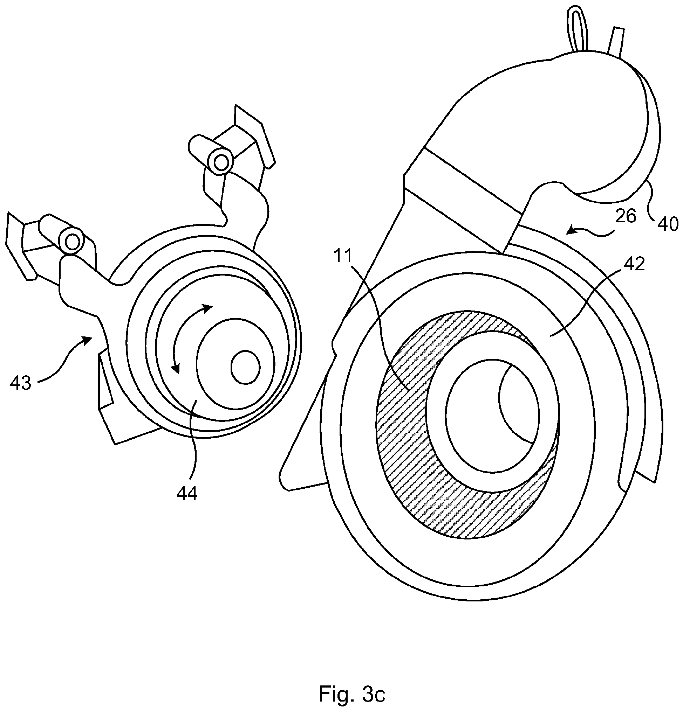

Figure 3c shows a further view of the circulation pump 26 of Figures 3a and b, where the volute 42 is been removed from the main body 43 and the impeller 44. According to an embodiment of the present invention, the condenser 11 of the heat pump 10 is arranged inside the volute 42 of the circulation pump 26. In this configuration, the surface of the condenser 11 can be reduced to a smallest area required for heat transfer from the condenser 11 to the process water 23, thereby reducing the amount of material needed to build the condenser 11. Further, as previously has been discussed, the water consumption of the domestic appliance is directly related to the volume of the pipe transporting the process water to the circulation pump and back into the washing compartment, and a large pipe volume will negatively affect the water consumption. Integrating the condenser with the circulation pump will make better use of available space in the circulation pump, thereby advantageously moving the condenser from being located in the pipe transporting the process water, which advantageously can be made to have a smaller volume, and thereby lower the water consumption.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. Heat pump (10) arranged in a domestic appliance (20) for heating water (23) in the domestic appliance, wherein:
a condenser (11) of the heat pump (10) is integrated with a circulation pump (26) of the domestic appliance (20), the circulation pump (26) being configured to circulate the water (23) heated by the condenser (11), **characterized by**,
said condenser (11) being arranged within a volute (42) of the circulation pump (26) and said condenser (11) being configured to be ring-shaped to fit an inner circular wall of the volute (42).

2. The heat pump (10) of claim 1, wherein
an evaporator (13) of the heat pump (10) is arranged at a peripheral wall of the domestic appliance (20) thereby being exposed to ambient air.

3. The heat pump (10) of claim 2, further comprising:
a variable speed fan (37) arranged to create a flow of air onto the evaporator (13).

4. Domestic appliance (20) comprising a heat pump (10) according to claim 1, for heating water (23).

5. The domestic appliance of claim 4, said domestic appliance being any one of a dishwasher and a washing machine.

## Patentansprüche

1. In einem Haushaltsgerät (20) angeordnete Wärmepumpe (10) zum Erwärmen von Wasser (23) in dem Haushaltsgerät, wobei:
ein Kondensator (11) der Wärmepumpe (10) in einer Umwälzpumpe (26) des Haushaltsgeräts (20) integriert ist, wobei die Umwälzpumpe (26) dazu ausgebildet ist, durch den Kondensator (11) erwärmtes Wasser (23) zu zirkulieren,
**dadurch gekennzeichnet, dass** der Kondensator (11) in einem Spiralgehäuse (42) der Umwälzpumpe (26) angeordnet ist und der Kondensator (11) ringförmig ausgebildet ist, um mit einer kreisförmigen Innenwand des Spiralgehäuses (42) zusammenzupassen.

2. Wärmepumpe (10) nach Anspruch 1, wobei ein Verdampfer (13) der Wärmepumpe (10) an einer Umfangswand des Haushaltsgeräts (20) angeordnet ist und dadurch Umgebungsluft ausgesetzt ist.

3. Wärmepumpe (10) nach Anspruch 2, ferner umfassend:
ein Gebläse (37) mit variabler Drehzahl zur Erzeugung eines Luftstroms auf den Verdampfer (13).

4. Haushaltsgerät (20), umfassend eine Wärmepumpe (10) nach Anspruch 1 zum Erwärmen von Wasser (23).

5. Haushaltsgerät nach Anspruch 4, wobei das Haushaltsgerät ein Geschirrspüler oder eine Waschmaschine ist.

## Revendications

1. Pompe à chaleur (10) disposée dans un appareil ménager (20) pour chauffer de l'eau (23) dans l'appareil ménager,
un condenseur (11) de la pompe à chaleur (10) étant intégré à une pompe de circulation (26) de l'appareil ménager (20), la pompe de circulation (26) étant configurée pour faire circuler l'eau (23) chauffée par le condenseur (11),
**caractérisée en ce que**
ledit condenseur (11) est disposé à l'intérieur d'une volute (42) de la pompe de circulation (26) et ledit condenseur (11) est configuré pour avoir une forme annulaire de manière à s'ajuster à une paroi circulaire intérieure de la volute (42).

2. Pompe à chaleur (10) selon la revendication 1,
un évaporateur (13) de la pompe à chaleur (10) étant disposé au niveau d'une paroi périphérique de l'appareil ménager (20) pour être ainsi exposé à l'air ambiant.

3. Pompe à chaleur (10) selon la revendication 2, comprenant en outre :
un ventilateur à vitesse variable (37) prévu pour créer un flux d'air sur l'évaporateur (13).

4. Appareil ménager (20) comprenant une pompe à chaleur (10) selon la revendication 1, pour chauffer de l'eau (23).

5. Appareil ménager selon la revendication 4, ledit appareil ménager étant l'un quelconque parmi un lave-vaisselle et une machine à laver.
